# EUROPEAN PATENT APPLICATION

(11) **EP 2 549 170 A2**
(43) Date of publication of application: **23.01.2013**
(21) Application number: 12005275.8
(22) Date of filing: 18.07.2012
(51) Int. Cl.: F16M 11/14, F16M 11/20

(54) **Ball head centering structure**

(30) Priority: 20.07.2011 CN 201120257709 U
(71) Applicant: Foshan Nanhai Chevan Optical Electronics Co., Ltd, Guangdong (CN)
(72) Inventor: Lee, Li-Wha, Foshan, Guandong (CN)
(74) Representative: Riebling, Peter

(57) **Abstract**

A ball head centering structure comprising a ball (10) with a portion trunked to form a planar surface (102); a ball limiting housing formed by an upper shell (13) and a lower shell (14), wherein a strut (20) is provided within a center hole of the lower shell and engages a spring (21) disposed in the center hole such that the top surface of the strut is in close contact with the planar surface of the ball. The beneficial effects of this invention are that the centering structure is structurally simple and easily operable.

## Description

### Technical field

The invention relates to ball head of a tripod or monopod, especially relates to an ball head having improved centering structure.

### Background arts

In the existing photographic equipment, ball heads for a photographic tripod always have a ball and a socket with the ball freely rotatable in the socket. Although the rotation of ball is very convenient in the current designs, it is difficult to have it restored and maintained in the center position of the socket, and therefore repeated calibration is always necessary in order to restore the ball back to the center position.

### Summary of invention

One aspect of the invention is aiming at provides a ball head centering structure which is structurally simple, and can be easily and quickly operated.

The aim is achieved by providing a ball head centering structure comprising a ball with a portion trunked to form a planar surface; a ball limiting housing formed by an upper shell and a lower shell, wherein a strut is provided within a center hole of the lower shell and engages a spring disposed in the center hole such that the top surface of the strut is in close contact with the planar surface of the ball.

Preferably, the strut is provided with a circumferential groove which engages a hook portion of a push button rod extended transversely into the lower shell at a first position of the push button rod and disengages the hook portion at a second position of the push button rod.

Preferably, the push button rod is pivotable around a pivotal point which can be in the form of a groove into which a position pin can be engaged so that the push button rod is pivotable around the pivotal point.

Preferably, a plurality number of positioning recesses are provided on the top surface of the lower shell, the push button rod is provided with a corresponding recess on the surface facing the top surface of the lower shell for accommodating a small ball. By means of such arrangement, positioning of the push button rod is achieved, i.e. a positioning recess is arrange to corresponds to the first position of the push button rod, and another positioning recess is arrange to corresponds to the second position of the push button rod. When the push button rod pivots from the first position to the second position, the small ball is moved with the push button rod from one recess to the other.

Preferably, the top surface of the strut is planar.

Preferably, an upper ball bearing is provided between the upper shell and the ball and is fixed to the upper shell, and a low ball bearing is provided between the lower shell and the ball and is fixed to the lower shell.

Preferably, the lower shell and the base is pivotally connected by an upward extending screw, the spring is pre-pressed to the end screw that extended in the center hole of the lower shell.

Preferably, the base is provided with a flange which extends upward to the lower half of the lower shell, a stop pad is provided between the flange and the lower shell to for engagement with a transversely extending stop screw.

By means of the planar surface of the ball that is arrange initially perpendicular to the center line of the ball, and hence the central line of the structure, and is in close contact to the top surface of the strut, by selecting the spring with a elastic modulus that is sufficient to withstand the torque generated by the unintentional rotation of the ball, the ball can be maintained at the center position of the housing where the strut is in close contact with the planar surface of the ball. At this center position, the ball can not be rotated freely but can only be pivoted around the central line of the structure. The ball can be rotated away from the center position only at an intentional force that has a component larger that the elastic force of the spring.

When the push button rod is provided which is for engagement with the strut at the annular groove of the strut, the spring can be selected just with a elastic modulus that could pre-press the strut without other additional requirements, as the ball can be "locked" at the central position by the engagement of the hook portion and the groove of the strut. As the hook portion disengages from the groove of the strut, the ball can then be rotated freely.

The beneficial effects of this invention are that the centering structure is structurally simple and easily operable.

### Description of drawings

Figure 1 is an exploded view of a ball head centering structure according to one embodiment of the invention.
Figure 2 is a longitudinal section view of the ball head centering structure according to one embodiment of the invention.
Figure 3 shows the positional relation of the push button rod and the strut.

### Preferred embodiments

The invention will be described in further detail with reference to the drawings accompanied.

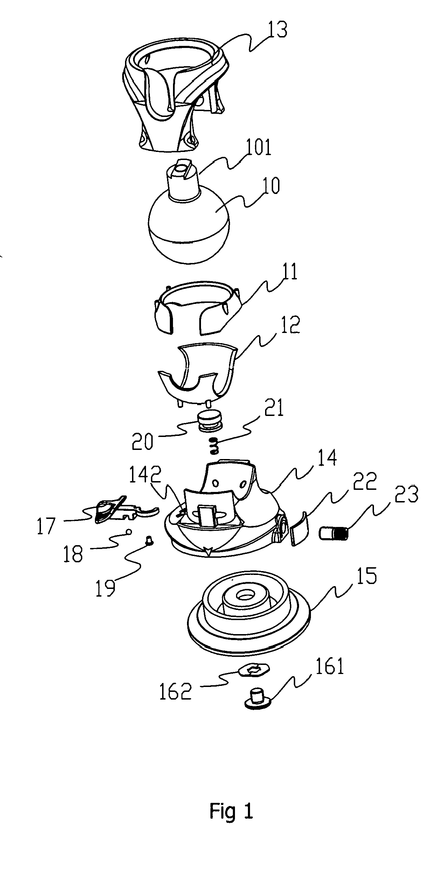

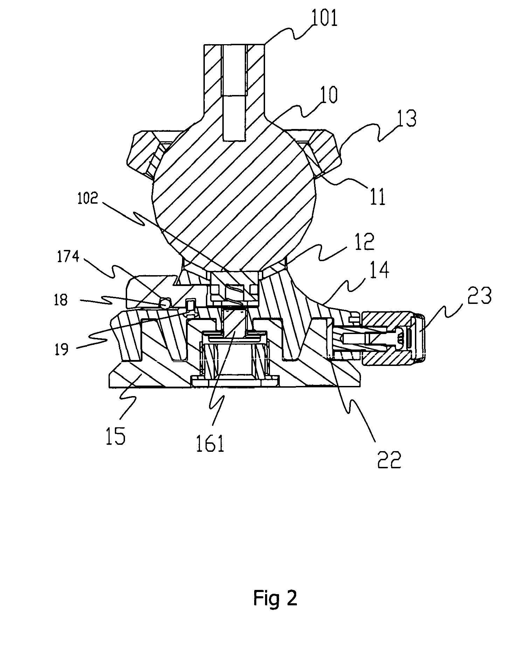

Referring first to Figure 1 and 2, a specific implementation of the ball head centering structure of the present invention is provided. The structure comprises a ball 10 having a boss portion 101 at the top of the ball which is provided with a boss hole for engaging with other component of the tripod head, and a plane 102 at the button of the ball 10 (the plane is not visible in Figure 1 but can be seen in Figure 2). The ball 10 is coupled in the substantially spherical space defined by a housing formed by an upper shell 13 and a lower shell 14. Preferably, the space is defined by an upper bearing and a lower bearing disposed between the ball 10 and the upper shell 13 and the ball 10 and the lower shell 14 respectively. The upper bearing and the lower bearing is preferably made of synthetic material to increase the friction therebetween and are fixed to the upper shell and lower shell. The lower shell 14 is pivotally connected to a base 15 by a screw 161 and a gasket 162. Preferably, the base has a flange extended into the lower shell 14 from bottom and a pivotally positioning structure can be formed by a stop screw 23 and a brake pad 22 to transversely engage both the lower shell and the base.

A center hole is provided on the lower shell 14, whose central axis is in alignment to the central axis of the base 15. A strut 20 is seated in the center hole and is connected to a spring, e.g. a compressing spring 21, by means of which the strut 20 can be displaced from a first position, i.e. a higher position, to a second position, i.e. a lower position, along the center hole during compressing of the spring 21 and can be displaced from the second position back to the first position during restoration of the spring. Preferably, the spring extends into the center hole sufficiently deep so that the strut 20 can be displaced smoothly within the hole and detachment from the center hole can be avoided. The spring can be arranged so that it is pre-compressed against a head of the screw 161, alternatively, in case the lower shell 14 and the base 15 is designed not pivotable by providing a blind hole at the center of the lower shell 15, the spring can be arranged to pre-compressed against the blind hole.

The strut 20 can be in the shape of a cylinder which has a planar or other regular surface and an annular groove 201 provided around the body. The annular groove 201 is provided for engagement with a hook portion of a push button rod 17 extended into the lower shell 14 transversely from an opening on the lower shell such that when the hook portion engages with the annular groove 201, the freedom on Z direction, i.e. up and down, is constrained so that Z direction movement of the strut in the center hole will not occur; a cavity is provided in the lower shell so that the hook portion of the push button rod 17 is pivotable in the lower shell to disengage from the annular groove whereby the Z direction freedom of the strut in the center hole is restored.

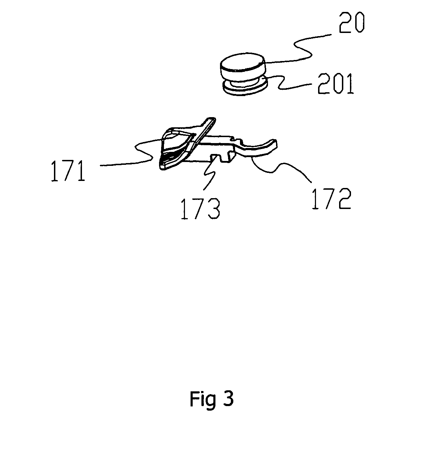

Referring now to Figure 3, the push button rod 17 has a pivotal point 173 which can be designed as a groove 173. A pin 19 is couple into the groove 173 so that pivotal movement of the push button rod 17 around the point 173 can be realized. The push button 171 of the push button rod 17 is exposed outside the lower shell to be handled or operated by a user. It is preferable that the lower shell is provided with a plurality number of, and preferably two positioning slots 142 with each of which provided with a small ball 18 so that corresponding positioning of the push button rod is realized, i.e. a respective positioning groove 142 corresponding to a position where the hook portion has completely disengaged from the annular groove, and a position where the hook portion has completely engaged with the annular groove. The small ball 18 provided will enhance the positioning effect of the push button rod at the two positions.

After assembly, when the hook potion 172 has completely engaged with the annular groove 201 the planar surface 102 of the ball 10 is in close contact with the top surface of the strut 20 and the strut is locked transversely by the hook portion so that rotation of the ball 10 by unintentional force is avoid and only pivotal movement of the ball is allowed. When the push button rod is pivoted to the position where it is completely disengaged from the annular ring, the strut is then only supported by the spring 21 and the ball 10 can be rotated easily by a minor force that is sufficient to break the engagement of the top of the strut and the planar surface of the ball, i.e. an intentional force that has a vertical component that is larger that the elastic force of the spring.

## Claims

1. A ball head centering structure comprising a ball with a portion trunked to form a planar surface; a ball limiting housing formed by an upper shell and a lower shell, wherein a strut is provided within a center hole of the lower shell and engages a spring disposed in the center hole such that the top surface of the strut is in close contact with the planar surface of the ball.

2. The ball head centering structure of claim 1, **characterized in that**, the strut is provided with a circumferential groove which engages a hook portion of a push button rod extended transversely into the lower shell at a first position of the push button rod and disengages the hook portion at a second position of the push button rod.

3. The ball head centering structure of claim 2, **characterized in that**, the push button rod is pivotable around a pivotal point which can be in the form of a groove into which a position pin can be engaged so that the push button rod is pivotable around the pivotal point.

4. The ball head centering structure of claim 3, **characterized in that**, a plurality number of positioning recesses are provided on the top surface of the lower shell, the push button rod is provided with a corresponding recess on the surface facing the top surface of the lower shell for accommodating a ball. By means of such arrangement, positioning of the push button rod is achieved, i.e. a positioning recess is arrange to corresponds to the first position of the push button rod, and another positioning recess is arrange to corresponds to the second position of the push button rod. When the push button rod pivots from the first position to the second position, the ball is moved with the push button rod from one recess to the other.

5. The ball head centering structure of claim 1, **characterized in that**, the top surface of the strut is planar.

6. The ball head centering structure of claim 1, **characterized in that**, an upper ball bearing is provided between the upper shell and the ball and is fixed on the upper shell, and a low ball bearing is provided between the lower shell and the ball and is fixed on the lower shell.

7. The ball head centering structure of claim 1, **characterized in that**, the lower shell and the base is pivotally connected by an upward extending screw, the spring is pre-pressed to the end screw that extended in the center hole of the lower shell.

8. The ball head centering structure of claim 1, **characterized in that**, the base is provided with a flange which extends upward to the lower half of the lower shell, a stop pad is provided between the flange and the lower shell to for engagement with a transversely extending stop screw.
